# EUROPEAN PATENT APPLICATION

(11) **EP 2 153 961 A1**
(43) Date of publication of application: **17.02.2010**
(21) Application number: 08763930.8
(22) Date of filing: 28.05.2008
(51) Int. Cl.: B28D 5/00, C03B 33/10

(54) **TIP HOLDER FOR HAND CUTTER, AND HAND CUTTER HAVING THE TIP HOLDER**

(30) Priority: 06.06.2007 JP 2007176723
(71) Applicant: Mitsuboshi Diamond Industrial Co., Ltd., Suita-city, Osaka 564-0044 (JP)
(72) Inventor: HARAGUCHI, Hirotake, Suita-city Osaka 564-0044 (JP); MAEKAWA, Kazuya, Suita-city Osaka 564-0044 (JP)
(74) Representative: TBK-Patent
(86) International application number: PCT/JP2008/001330
(87) International publication number: WO 2008/149514

(57) **Abstract**

Provided is a manual cutter comprising a holder fitting unit (30) having a holding hole portion (35). A tip holder (10) for the column-shaped manual cutter includes a tip (14) rotatably fitted at its one end, and a positioning attachment part (16) formed by notching the other end. The holder attachment part (30) is caused to fix the tip holder (10) in the holding hole portion (35) by abutting and pushing a fixing screw (38) onto the positioning attachment part (16). As a result, the complicatedness of the tip fitting and replacing works can be eliminated to make the tip proper without any error.

## Description

### TECHNICAL FIELD

The present invention relates to a tip holder used for a manual cutter for forming a scribe line on a brittle material-based substrate and a manual cutter having the tip holder.

### BACKGROUND ART

There is conventionally known a manual cutter as a manual tool used to manually scribe a brittle material-based substrate (hereinafter, "substrate") into a desired size. A tip is attached to a tip end of a conventional manual cutter via a tip holder. Figs. 1 to 4 show the conventional manual cutter. Fig. 1 is a front view, Fig. 2 is a side view, Fig. 3 is a perspective view showing a lower portion slantwise, and Fig. 4 is an enlarged view of the lower portion.

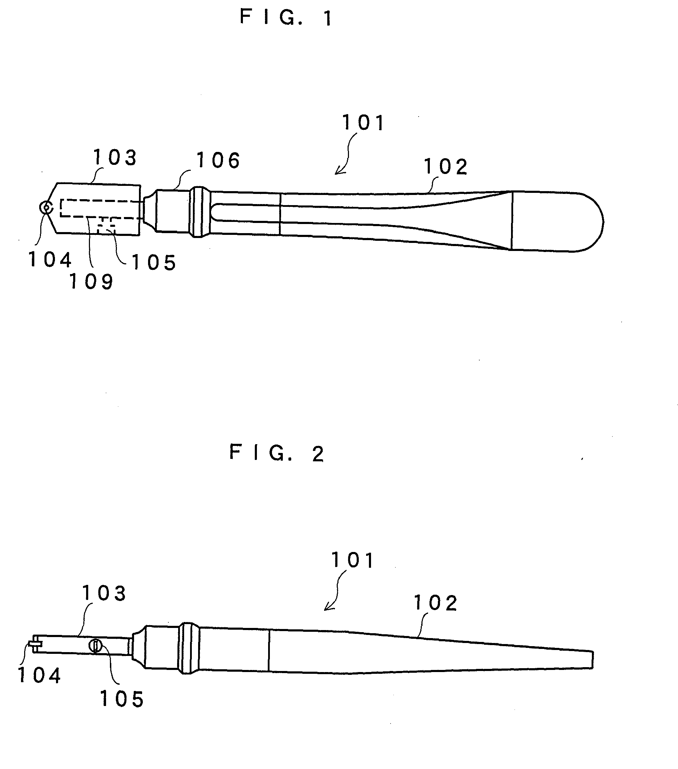

As shown in Fig. 1, a manual cutter 101 is configured to include a handle 102, a tip holder 103, and a coupler 106. The tip holder 103 has a rotational tip 104 attached to a tip end thereof and is detachably attached to the handle 102. The coupler 106 is provided in a lower portion of the handle 102. A shaft center 109 is attached below the coupler 106 via a spring and a C-ring that are not shown. The holder main body 103 is attached to the shaft center 109 by a setscrew 105.

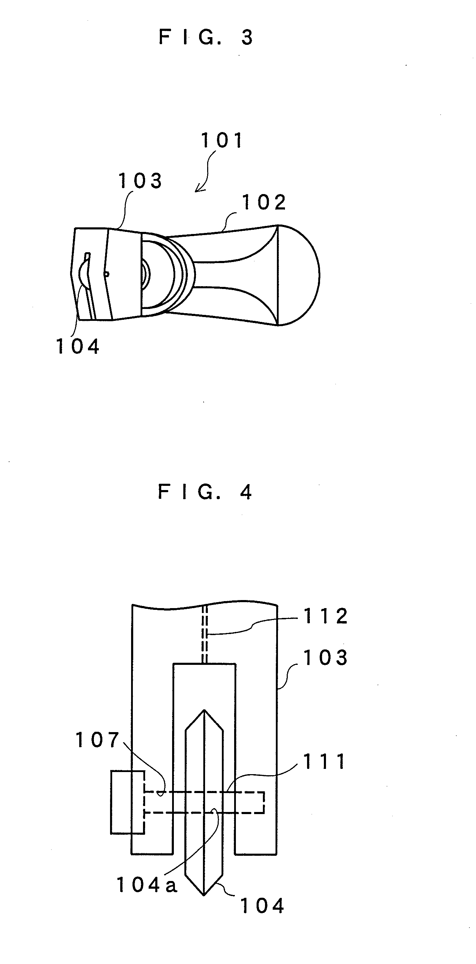

As shown in Fig. 4, the tip 104 is rotatably attached into a slot on a lower end of the tip holder 103 by a pin 111. The tip 104 is designed to form a scribe line by moving while pressure contacting on a brittle material-based substrate. A lubricant reservoir, that is not shown, formed within the handle 102 stores therein lubricant oil, and an oil introduction center 112 is formed at the center of the shaft center 109 of an extended shaft. When the tip 104 scribes the brittle material-based substrate, the lubricant oil is fed from an upper portion of the shaft center 109 and the tip 104 smoothly rotates. However, the tip 104 is worn and deteriorated as scribing the brittle material-based substrate. Due to this, it is necessary to detach the worn tip 104 of the manual cutter 101 from the tip holder 103 and to either replace the tip 104 by a new tip or to replace the manual cutter 101 by another manual cutter 101 to which a new tip is attached. Furthermore, if a material or thickness of a work target substrate is changed, it is also necessary to replace the manual cutter by another manual cutter to which a tip having specifications suited for the substrate is attached.

As shown in Fig. 4, in case of the conventional manual cutter, a user attaches the tip 104 into the tip holder 103 by matching a slot 107 on the lower end of the tip holder 103 to a shaft hole 104a of the tip 104 and inserting the pin 111 into both of the slot 107 and the shaft hole 104a. Thereafter, as shown in Fig. 1, the tip holder 103 is fixed to the shaft center 109 using the setscrew 105. Since a size of the tip 104 is as small as, for example, 2 mm to 3 mm, it is difficult for a person other than a skilled person to insert the pin 111 into the shaft hole 104a of the tip 104. Due to this, if the tip is worn, a person using the conventional manual cutter replaces the manual cutter including the worn tip by another manual cutter including a new tip without carrying out a replacement operation of detaching the worn tip and attaching a new tip. Patent Document 1 discloses a glass cutter of this type.
Patent Document 1: Japanese Unexamined Utility Model Publication No. 57-96932.

### DISCLOSURE OF INVENTION

### PROBLEMS TO BE SOLVED BY THE INVENTION

Since a tip has a diameter of about 2.5 mm and the pin has a diameter of 0.5 mm∅, both the tip and the pin are difficult to handle. Accordingly, a tip attachment operation for a conventional manual cutter disadvantageously requires lots of time. Moreover, while a plurality of specifications is set for tips according to a type, thickness, heat history, and the like of glass, it is difficult to discriminate the specifications of a tip because the tip is small. Due to this, there is a probability of attaching a tip having different specifications from a designated specification to the hand cutter.

The present invention has been achieved while paying attention to problems of a tip holder attached to the conventional manual cutter. It is an object of the present invention to eliminate cumbersome of a tip attachment operation and tip replacement operation. It is another object of the present invention to enable a user to accurately replace one tip by an appropriate tip.

### MEANS TO SOLVE THE PROBLEMS

To solve the problems, a tip holder for a manual cutter of the present invention used to scribe a brittle material-based substrate, comprises: a tip rotatably attached to one end of said tip holder, and forming a scribe line on a brittle material; and an attachment formed by cutting other end of said tip holder.

In the tip holder for a manual cutter, a code of characteristic data may be recorded on said tip holder.

In the tip holder for a manual cutter, said code may be a two-dimensional code.

In the tip holder for a manual cutter, the characteristic data of said tip holder may include data indicating a type of said tip.

In the tip holder for a manual cutter, said attachment may include a magnet.

To solve the problems, a tip holder for a manual cutter of the present invention used to scribe a brittle material-based substrate, comprises: a tip rotatably attached to one end of said tip holder, and forming a scribe line on a brittle material; and an operation bar provided on a side surface of said tip holder, for grasping the tip holder.

In the tip holder for a manual cutter, a recess may be provided in a part of a side surface of said tip holder.

In the tip holder for a manual cutter, a hole portion may be provided in a part of a side surface of said tip holder.

In the tip holder for a manual cutter, a code of characteristic data may be recorded on said tip holder.

In the tip holder for a manual cutter, said code may be a two-dimensional code.

In the tip holder for a manual cutter, the characteristic data of said tip holder may include data indicating a type of said tip.

The tip holder for a manual cutter may comprise a magnet on other end of the tip holder.

To solve the problems, a manual cutter of the present invention comprises: a handle; a tip holder scribing a brittle material-based substrate; and a holder attachment part provided on a tip end of said handle, and fixing said tip holder, wherein said tip holder comprises: a tip rotatably attached to one end of said tip holder, and forming a scribe line on a brittle material; and an attachment formed by cutting other end of said tip holder, and wherein said tip attachment comprises: a holding hole portion holding said tip holder by inserting said tip holder into the holding hole portion; and a fixing member pressing said attachment of said tip holder inserted into said holding hole portion, and fixing said tip holder into said holding hole portion.

In the manual cutter, said tip holder further may comprise a code recording characteristic data to said tip.

In the hand cutter, said code may be a two-dimensional code.

In the manual cutter, the characteristic data of said tip holder may include data indicating a type of said tip.

In the manual cutter, said tip holder may be made of magnetic metal, said holder attachment part may be include a magnet on said holding hold, and said magnet may attracts and fixes said tip holder inserted into said holding hole portion by a magnetic force.

To solve the problems, a manual cutter of the present invention comprises: a handle; a tip holder scribing a brittle material-based substrate; and a holder attachment part provided on a tip end of said handle, and fixing said tip holder, wherein said tip holder comprises: a tip rotatably attached to one end of said tip holder, and forming a scribe line on a brittle material; and an operation bar provided on a side surface of said tip holder, for grasping the tip holder, and wherein said holder attachment part comprises: a holding hole portion holding said tip holder by inserting said tip holder into the holding hole portion; and an operation bar introduction groove, said operation bar of said tip holder inserted into said holding hole portion being introduced into the operation bar introduction groove.

In the hand cutter, said tip holder may be include a recess in a part of the side surface of said tip holder, and said holding hole portion may include an elastic body fitted into said recess when said tip holder is inserted into the holding hole portion.

In the brittle cutter, said tip holder may include a hole portion in a part of the side surface of said tip holder, the holder attachment part may include a horizontal hole portion communicating with said holding hole portion, and said tip holder may be fixed into said holding hole portion by abutting a support abutment member inserted into said horizontal hole portion against said tip holder when said tip holder is inserted into said holding hole portion.

### ADVANTAGES OF THE INVENTION

According to the present invention having such characteristics, a user can quite easily attach or detach a tip holder into or from within the attachment on a tip end of the manual cutter. Further, the user can complete tip replacement only by replacing the tip holder by another tip holder since there is no need to detach a tip from the tip holder.

Furthermore, according to the present invention, data on a type and running distance of the tip is held in the tip holder as a code. Due to this, the user can recognize the type and usage history according to necessity by reading the code during tip reproduction processing. Therefore, it is possible to accurately replace the tip by an appropriate tip.

### BRIEF DESCRIPTION OF DRAWINGS

[Fig. 1] Fig. 1 is a front view showing a conventional manual cutter.
[Fig. 2] Fig. 2 is a side view showing the conventional manual cutter.
[Fig. 3] Fig. 3 is a perspective view showing a tip holder for the conventional manual cutter from obliquely downward.
[Fig. 4] Fig. 4 is a partially enlarged front view showing a state of attaching a tip to a conventional tip holder.

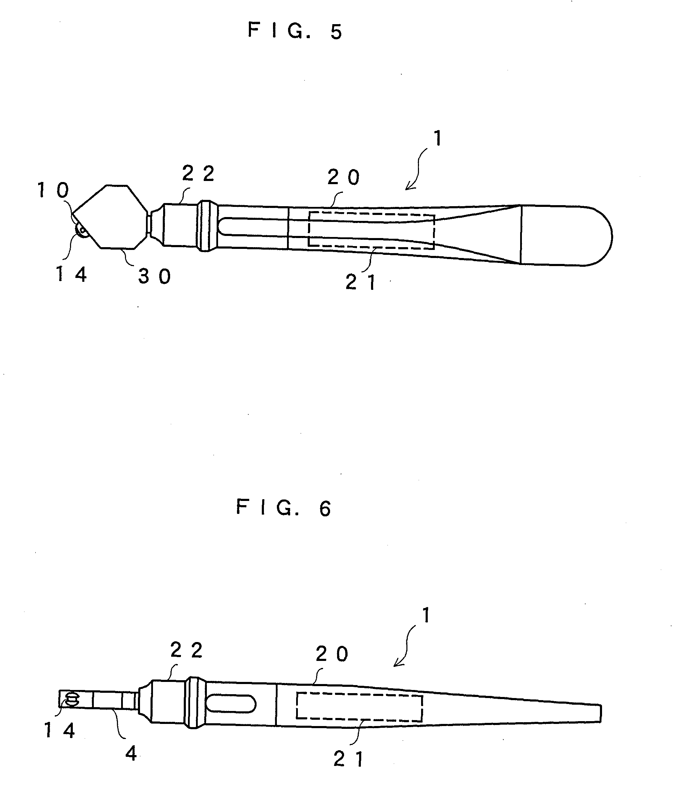

[Fig. 5] Fig. 5 is a front view showing a configuration of a hand cutter according to embodiment 1 of the present invention.
[Fig. 6] Fig. 6 is a side view of the manual cutter according to embodiment 1 of the present invention.

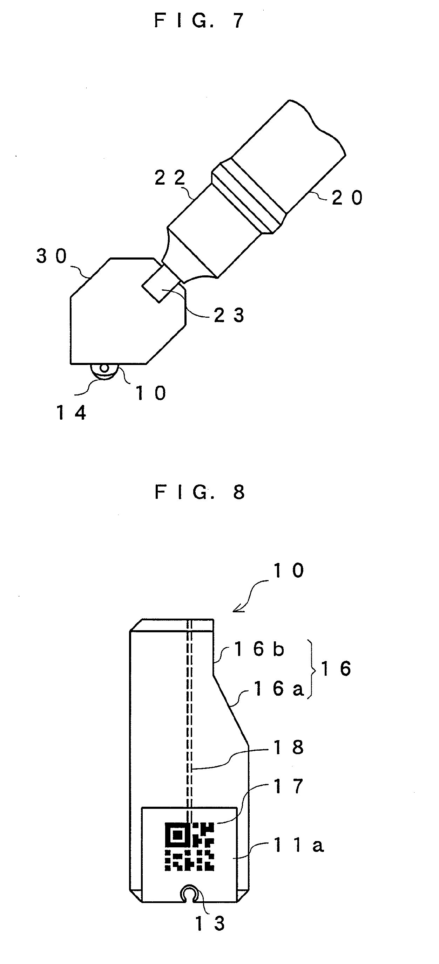

[Fig. 7] Fig. 7 is an enlarged front view of a lower portion of the cutter according to embodiment 1 of the present invention.
[Fig. 8] Fig. 8 is a front view showing a configuration of a tip holder according to embodiment 1 of the present invention.

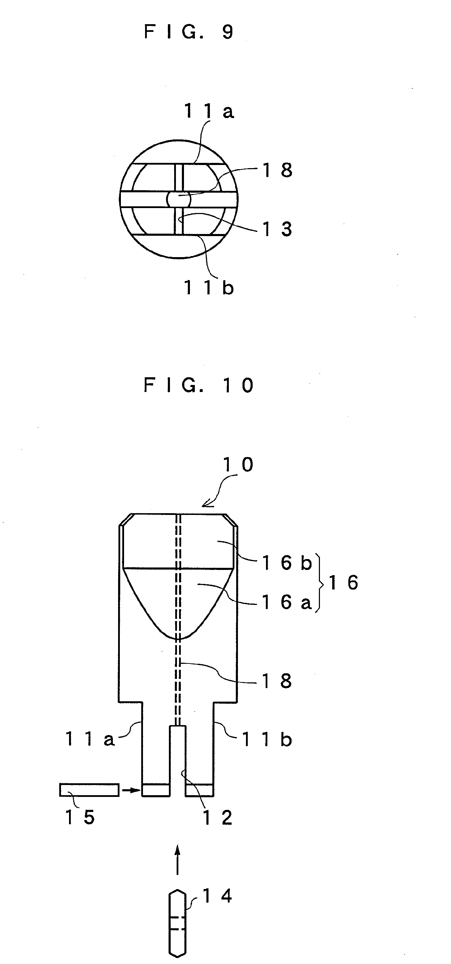

[Fig. 9] Fig. 9 is a bottom view of the tip holder according to embodiment 1 of the present invention.
[Fig. 10] Fig. 10 is a side view of the tip holder according to embodiment 1.

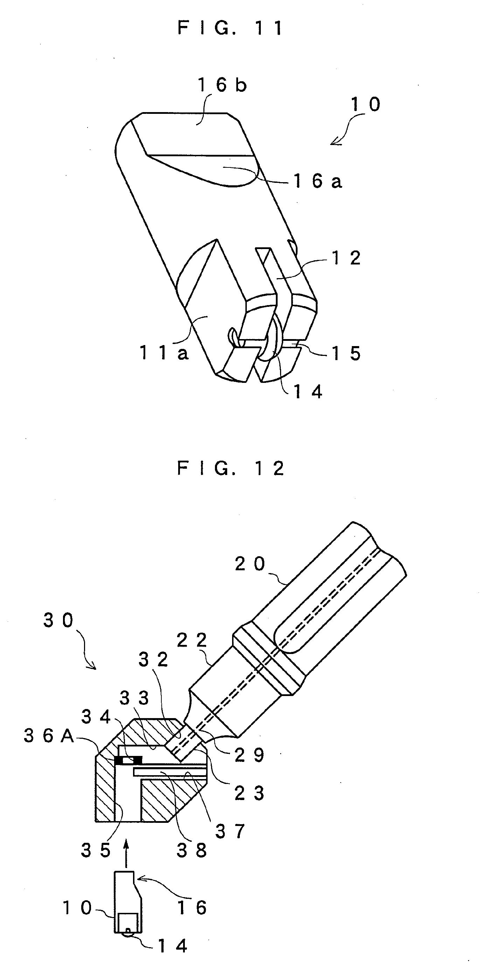

[Fig. 11] Fig. 11 is a perspective view of the tip holder according to embodiment 1.
[Fig. 12] Fig. 12 is a partially enlarged cross-sectional view showing a state of inserting the tip holder into a holder attachment part according to embodiment 1.

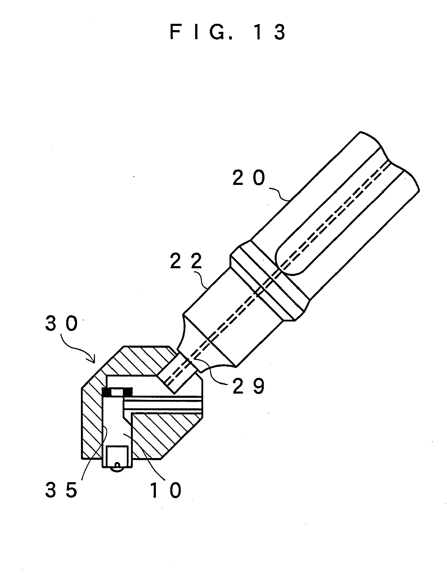

[Fig. 13] Fig. 13 is an enlarged front view showing a state of attaching the tip holder into the holder attachment part according to embodiment 1.

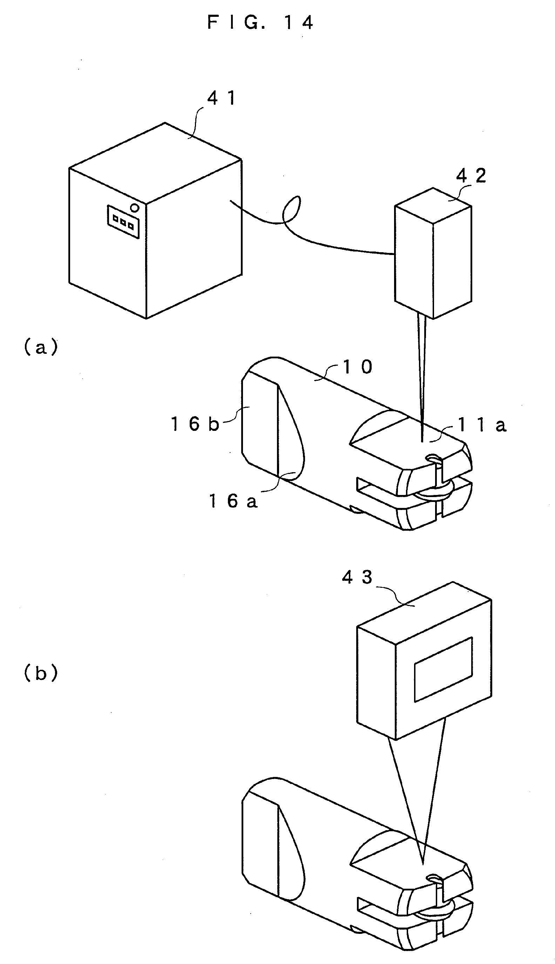

[Fig. 14] Fig. 14 is a schematic diagram showing a processing for writing and reading two-dimensional data to and from the tip holder.

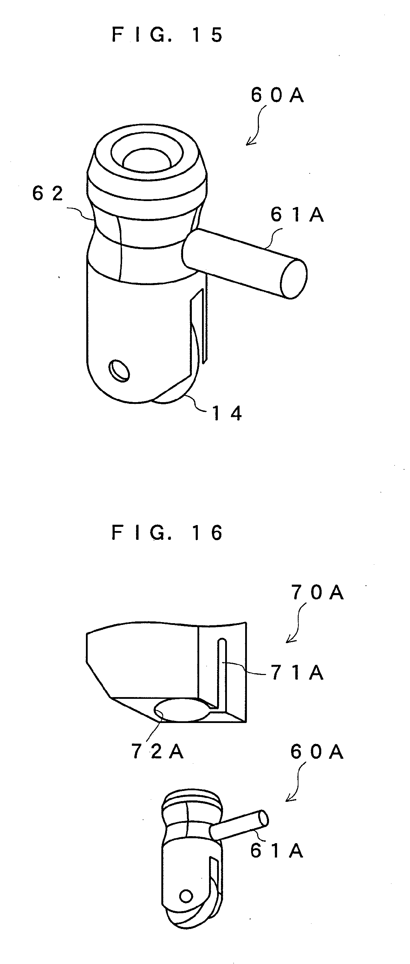

[Fig. 15] Fig. 15 is a perspective view of a tip holder according to embodiment 2 of the present invention.
[Fig. 16] Fig. 16 is a partially enlarged perspective view showing a state of inserting the tip holder into a holder attachment part according to embodiment 2.

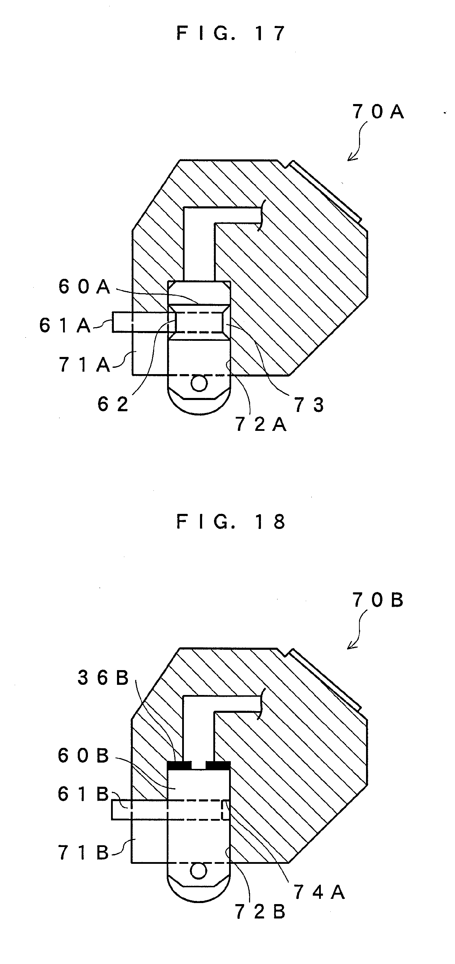

[Fig. 17] Fig. 17 is a diagram showing configurations of the tip holder and the holder attachment part according to embodiment 2.
[Fig. 18] Fig. 18 is a diagram showing configurations of a tip holder and a holder attachment part according to embodiment 3 of the present invention.

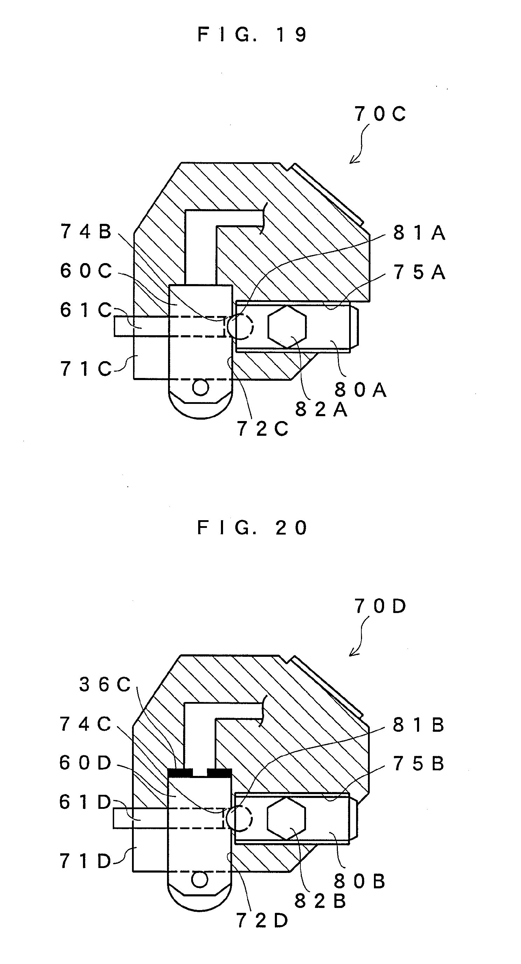

[Fig. 19] Fig. 19 is a diagram showing configurations of a tip holder and a holder attachment part according to embodiment 4 of the present invention.
[Fig. 20] Fig. 20 is a diagram showing configurations of a tip holder and a holder attachment part according to embodiment 5 of the present invention.

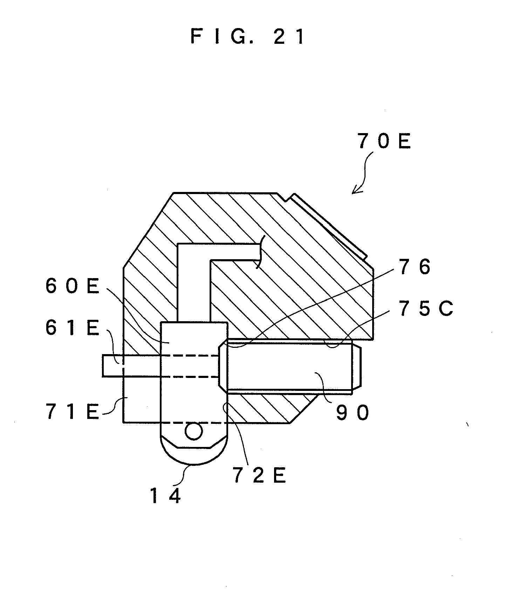

[Fig. 21] Fig. 21 is a diagram showing configurations of a tip holder and a holder attachment part according to embodiment 6 of the present invention.

### EXPLANATION FOR REFERENCE NUMERALS

- 1: Manual cutter
- 10,: 60A-60E Tip holder
- 11a, 11b, 16b: flat portion
- 12: Notch
- 13: Pin groove
- 14: Tip
- 15: Pin
- 16: Positioning attachment part
- 16a: Inclined portion
- 17: Two-dimensional code
- 18: Feed path
- 20: Handle
- 21: lubricant reservoir
- 22: Coupler
- 23: Shaft center
- 29: Oil inlet center
- 30,: 70A-70E Holder attachment part
- 32: Attachment hole portion
- 33, 34: Feed paths
- 35,: 72, 82, 92 Holding hole portion
- 36A, 36B: Magnet
- 38: Fixing screw
- 41: Controller
- 42: Head part
- 43: Reader
- 61A-61E: operation bar
- 62: Recess
- 71A-71E: Bar introduction groove
- 712A-72E: Holding hole portion
- 73: Elastic member
- 74A-74C: Operation bar hole portion
- 75A-75C: Horizontal hole portion
- 76: Bolt insertion hole portion
- 80A, 80B: Ball plunger
- 81A, 81B: Ball
- 82A, 82B: Plunger setscrew
- 90: Bolt

### BEST MODE FOR CARRYING OUT THE INVENTION

### (EMBODIMENT 1)

Fig. 5 is a front view of a manual cutter 1 according to embodiment 1 of the present invention. Fig. 6 is a side view of the manual cutter 1. Fig. 7 is an enlarged view showing a lower portion of the manual cutter 1. As shown in Fig. 5, the manual cutter 1 is configured to include a tip holder 10, handle 20, coupler 22, and holder attachment part 30. The holder attachment part 30 is designed to fix the tip holder 10 thereinto and hold the tip holder 10.

As shown in Figs. 5 and 6, a lubricant reservoir 21 storing lubricant oil is formed in the handle 20. The coupler 22 is provided in a lower portion of the handle 20. As shown in Fig. 7, a shaft center 23 is provided in the lower portion of the handle 20 via the coupler 22. The holder attachment part 30 is a member fixing and holding the tip holder 10 and attached to the shaft center 23.

The tip holder 10 will next be described. Fig. 8 is a front view of the tip holder 10 according to the present embodiment. Fig. 9 is a bottom view of the tip holder 10. Fig. 10 is a side view of the tip holder 10. Fig. 11 is a perspective view of a bottom surface of the tip holder 10.

As shown in these figures, the tip holder 10 is a generally cylindrical member made of, for example, a magnetic metal and has the tip 14 rotatably attached to a tip end of the tip holder 10. Generally square flat portions 11a and 11b are both provided on one end of the tip holder 10 to be parallel to a central axis of the tip holder 10. The tip holder 10 includes a notch 12 between these flat portions along the central axis, and includes a pin groove 13 provided on lower ends of the flat portions 11a and 11b in a direction perpendicular to the flat portions. A two-dimensional code 17 is printed on the flat portion 11a as described later.

As shown in Fig. 8, a feed path 18 is formed in a central portion of the tip holder 10. The feed path 18 feeds the lubricant oil to a pin 15 attached to the pin groove 13 and to the tip 14 attached to the pin 15.

Meanwhile, as shown in Figs. 8 and 10, a positioning attachment part 16 that includes an inclined portion 16a and a flat portion 16b and that is formed by cutting the tip holder 10 is provided on the other end of the tip holder 10. The flat portion 16b is parallel to the central axis of the tip holder 10 and perpendicular to the flat portions 11a and 11b present below the flat portion 16b. This attachment part 16 is intended to accurately position the tip holder 10 with respect to the holder attachment part 30 to be described later.

A shape of the tip 14 is, for example, a disc shape having a wheel diameter of 2.5 mm and a thickness of about 0.5 mm. The tip 14 includes a through-hole at center and a circumferential portion of the tip 14 on a cut surface along a diameter is conical. The tip holder 10 rotatably holds the tip 14 by penetrating the pin 15 inserted into the pin groove 13 through the central through-hole.

The holder attachment part 30 of the hand cutter will next be described. Fig. 12 is a cross-sectional view of the holder attachment part 30 and an enlarged front view showing the tip holder 10 inserted into the holder attachment part 30. Fig. 13 is a cross-sectional view of the holder attachment part 30 and an enlarged front view showing the tip holder 10 when the tip holder 10 is attached into the holder attachment part 30. As shown in these figures, the holder attachment part 30 has a polygonal cross section and includes a cylindrical holding hole portion 35 provided on one lower side and holding the tip holder.

The holder attachment part 30 is configured to include an attachment hole portion 32, feed paths 33 and 34, the holding hole portion 35, a magnet 36A, a fixing screw hole 37, and a fixing screw 38.

The attachment hole portion 32 is fitted into the shaft center 23. The lubricant oil is fed to the feed paths 33 and 34 from an oil inlet center 29 formed in a central portion of the shaft center 23 and connected to the lubricant reservoir 21. The magnet 36A is attached to a top of the holding hole portion 35 and holds the tip holder 10 using a magnetic force. The fixing screw 38 serving as a fixing member is inserted into the fixing screw hole 37 to contact and press the tip holder 10, thereby fixing the tip holder 10 into the holding hole portion 35.

To attach this tip holder 10 into the holder attachment part 30, the tip holder 10 is inserted into an opening of the holding hole portion 35 from the attachment part 16 as shown in Fig. 12. The magnet 36A thereby attracts the tip holder 10. If the fixing screw 38 further presses the inclined portion 16a of the tip holder 10, the tip holder 10 is positioned with respect to the holder attachment part 30 and fixed into the holder attachment part 30 as shown in Fig. 13. In this way, the magnet 36A attracts the tip holder 10, thereby facilitating attaching the tip holder 10 into the tip holder attachment part 30. Moreover, a user can safely detach the tip holder 10 since the magnet 36 attracts the tip holder 10 to prevent inadvertent falling of the tip holder 10 during detachment of the tip holder 10.

A similar configuration can be realized even if the magnet 36A is provided not in the holder attachment part 30 but in the attachment part 16 of the tip holder 10.

A method of recording various pieces of tip data will next be described. Various pieces of data characteristic of the attached tip 14 are recorded in the tip holder 10 according to the present embodiment as management data. Examples of the various pieces of data characteristic of the tip 14 include a type, manufacture date and lot number. When the used tip holder 10 returns to a manufacturing plant, the various pieces of data recorded in the tip holder 10 are readable by reading the management data recorded in the tip holder 10. Using the various pieces of data, appropriate reproduction processing can be performed on the tip attached to the tip holder. For example, the various pieces of data can be used for information for grinding or polishing the used tip and reproducing the tip to a usable tip. Moreover, it is possible to know history of a tip replaced by another tip from data on a manufacturing date and to use the data for quality management.

In the present embodiment, a code is recorded in the flat portion 11a or 11b of the tip holder as shown in, for example, Fig. 8. Although a barcode that is a one-dimensional code is available as this code, it is preferable to use a two-dimensional code because of a small recording area. More information can be recorded in a narrower area of the two-dimensional code than that of the one-dimensional code. The two-dimensional code includes a data restoring function. Due to this, even if the code is partially stained or damaged, a read sensor can restore the stained or damaged code to the two-dimensional code and read the obtained two-dimensional code.

Figs. 14(a) and 14(b) show writing of a two-dimensional code to the tip holder 10 and reading thereof from the tip holder 10. In Fig. 14(a), a controller 41 of a laser marker sets data to be set to form a pattern of the two-dimensional code. Examples of the data to be recorded include a type, manufacturing date, and management number of the tip. After forming the pattern of the two-dimensional code, a head part 42 directly prints the two-dimensional code on the flat portion 11a of the tip holder 10. In this way, the two-dimensional code 17 shown in Fig. 8 is printed on the flat portion 11a.

To read the printed two-dimensional code 17, a reader 43 reads the two-dimensional code 17 as shown in Fig. 14(b). The user can thereby check the data such as the type, manufacturing date or management number of the tip included in the two-dimensional code 17.

Furthermore, the tip holder 10 can be used for a scriber of any type other than the manual cutter. If the tip holder 10 is used for an automatic scriber, it is necessary to use correction data that is digitized an assembly accuracy for assembly of the tip and the tip holder during attachment or replacement of the tip holder. If the two-dimensional code 17 includes such correction data, the tip holder can be used in common for the hand cutter and the scriber.

In the present embodiment, the head part 42 directly prints the two-dimensional code on the tip holder 10. Alternatively, a label on which the two-dimensional code is printed may be bonded onto the tip holder 20. In the present embodiment, the head part 42 prints the two-dimensional code on either the flat portion 11a or 11b of the tip holder. Alternatively, the two-dimensional code may be recorded on the inclined portion 16a or flat portion 16b or recorded on a side surface of the cylindrical portion.

In the present embodiment, the data such as the type, manufacturing date, and lot number of the tip is recorded as the two-dimensional code, however, only one of the data may be recorded. Furthermore, other devices can be used in place of the controller 41, head part 42, and reader 43 of the laser marker as long as the devices record and read a two-dimensional code. A wireless handy reader can be replaced by the reader 43.

Moreover, in the present embodiment, the head part 42 records the characteristic data on the tip holder as the two-dimensional code. Alternatively, the two-dimensional code may be replaced by a close contact data carrier or the like. In this case, the data carrier is attached to the flat portion 16b or the like of the tip holder, and a read-write unit including data reading and writing functions is arranged in a portion opposed to the data carrier of the holder attachment part 30. By doing so, it is possible to read or write the characteristic data from or to the tip holder without use of a recorder, the read sensor or the like.

### (EMBODIMENT 2)

A tip holder 60A and a holder attachment part 70A according to embodiment 2 of the present invention will be described. Fig. 15 is a perspective view of the tip holder 60A according to embodiment 2. Fig. 16 is a partially enlarged view showing a state before inserting the tip holder 60A into the holder attachment part 70A. Fig. 17 is a cross-sectional view of the tip holder 60A and the holder attachment part 70A according to the present embodiment. A cross-section of the holder attachment part 70A shown in Fig. 17 is a surface obtained by cutting a part between both side surfaces of a polygonal shape by a surface in parallel to the both side surfaces.

The tip holder 60A is made of generally cylindrical magnetic metal and includes a recess 62 formed annularly on an entire outer circumference of the tip holder 60A. The tip holder 60A rotatably holds a tip 14 similar to that according to embodiment 1. The tip holder 60A includes an operation bar 61A protruding from a side surface of the tip holder 60A to facilitate inserting the tip holder 60A into the holder attachment part 70A.

The holder attachment part 70A includes a generally cylindrical holding hole portion 72A for inserting and holding the tip holder 60A, and a bar introduction groove 71A for introducing the operation bar 61A of the tip holder 60A. Only a portion of the bar introduction groove 71A is shown in a cross section of the holder attachment part 70A shown in Fig. 17. As shown in Fig. 17, the holding hole portion 72A includes an elastic member 73 such as a spring member.

The tip holder 60A is inserted into the holding hole portion 72A while introducing the operation bar 61 into the bar introduction groove 71A. When the tip holder 60A is inserted into the holding hole portion 72A and pulled up the operation bar 61A to an uppermost portion of the bar introduction groove 71A, the recess 62 of the tip holder 60A is engaged with the elastic member 73 of the holding hole portion 72A to fix the tip holder 60A into the holder attachment part 70A as shown in Fig. 17. Further, it is possible to accurately position the tip holder 60 within the holding hole portion 72A of the holder attachment part 70A since the operation bar 61A is prevented from moving in the bar introduction groove 71A in a rotational direction.

### (EMBODIMENT 3)

A holder attachment part 70B and a tip holder 60B according to embodiment 3 of the present invention will be described referring to Fig. 18. Fig. 18 shows a cross section of the holder attachment part 70B and shows the tip holder 60B according to the present embodiment. A cross section of the holder attachment part 70B shown in Fig. 18 is a surface obtained by cutting a part between both side surfaces of a polygonal shape by a surface in parallel to the both side surfaces.

The holder attachment part 70B according to the present embodiment is configured similar to the holder attachment part 70A according to embodiment 2 except that the holder attachment part 70B includes a magnet 36B in an upper portion of a holding hole portion 72B and the holding hole portion 72B does not include an elastic member 73.

The tip holder 60B is made of generally cylindrical magnetic metal, rotatably holds a tip 14 similar to that according to embodiment 1 on a lower end of the tip holder 60B, and further includes a through-hole on a side surface thereof. While a user insets an operation bar 61B into this through-hole, one end of the operation bar 61B does not protrude from the through-hole but remains in the through-hole. Therefore, as shown in Fig. 18, an operation bar hole portion 74A that is a recess is formed on one end of the through-hole.

If the tip holder 60B is inserted into the holding hole portion 72B while introducing the operation bar 61B into a bar introduction groove 71B, the magnet 36B attracts the tip holder 60B using a magnetic force, accurately positions the tip holder 60B, and surely fixes the tip holder 60B into the holder attachment part 70B.

### (EMBODIMENT 4)

A holder attachment part 70C and a chip holder 60C according to embodiment 4 of the present invention will be described referring to Fig. 19. Fig. 19 shows a cross section of the holder attachment part 70C and shows the tip holder 60C according to the present embodiment. The cross section of the holder attachment part 70C shown in Fig. 19 is a surface obtained by cutting a part between both side surfaces of a polygonal shape by a surface in parallel to the both side surfaces.

The holder attachment part 60C according to the present embodiment is configured similarly to the holder attachment part 60B according to embodiment 3, and includes an operation bar 61C similar to the operation bar 61B and an operation bar hole portion 74B similar to the operation bar hole portion 74A.

As shown in Fig. 19, the holder attachment part 70C includes a holding hole portion 72C, a horizontal hole portion 75A, and a bar introduction groove 71C. The holding hole portion 72C holds the inserted tip holder 60C. The horizontal hole portion 75A communicates with the holding hole portion 72C, and a ball plunger 80A serving as a support abutment member is inserted into the horizontal hole portion 75A. Fig. 19 shows a portion of the bar introduction groove 71C, and the operation bar 61C is introduced into the bar introduction groove 71C. The holder attachment part 70C also includes a screw hole for fixing the ball plunger 80A into the holder attachment part 70C. Although Fig. 19 does not show this screw hole, the screw hole is provided at a position of a plunger setscrew 82A in a perpendicular direction to a sheet of Fig. 19 to the horizontal hole portion 75A from laterally.

The ball plunger 80A, which is generally cylindrical, has an opening on a left end thereof and includes a metal ball 81A a part of which protrudes from the opening. An internal spring or the like of the ball plunger 80A urges the ball 81A toward outside of the opening.

If this tip holder 60C is inserted into the holding hole portion 72C of the holder attachment part 70C and the ball plunger 80A is inserted into the horizontal hole portion 75A while inserting the operation bar 61C into the bar introduction groove 71C, the ball 81A of the ball plunger 80A is fitted into the operation bar hole portion 74B of the tip holder 60C. If the ball plunger 80A is fixed to the holder attachment part 70C using the plunger setscrew 82A in this state, the tip holder 60C is positioned with respect to the holder attachment part 70C and fixed into the holder attachment part 70C.

### (EMBODIMENT 5)

Embodiment 5 of the present invention will be described referring to Fig. 20. Fig. 20 shows a cross section of a holder attachment part 70D and a tip holder 60D according to the present embodiment. The cross section of the holder attachment part 70D shown in Fig. 20 is a surface obtained by cutting a part between both side surfaces of a polygonal shape by a surface in parallel to the both side surfaces.

The holder attachment part 70D according to the present embodiment differs in configuration from the holder attachment part 70C according to embodiment 4 in that a magnet 36C is provided in an upper portion of a holding hole portion 72D. The holder attachment part 70D is similar in other configurations to the holder attachment part 70C according to embodiment 4. The magnet 36C attracts the tip holder 60D inserted into the holding hole portion 72D, thereby accurately positioning the tip holder 60D with respect to the holder attachment part 70D, and fixing the tip holder 60D into the holder attachment part 70D.

In the present embodiment, the tip holder 60D is fixed into the holder attachment part 70D using the magnet 36C as well as a ball plunger 80B, thereby facilitating attachment of the tip holder 60D similarly to embodiment 1. Furthermore, the tip holder 60D attracted by the magnet 36C can be safely detached since the tip holder 60D is prevented from being inadvertently fallen during detachment of the tip holder 60D.

A similar configuration can be realized even if the magnet 36C is provided not in the holder attachment part 70D but in an upper portion of the tip holder 60D.

An operation bar hole portion according to each of embodiments 4 and 5 is not necessarily at a position of a through-hole into which the operation bar is penetrated. The tip holder can be inserted into the holder attachment part as long as a recess or the like fitted into a ball of the ball plunger is at an appropriate position.

Alternatively, the holder attachment part and the tip holder according to each of embodiments 4 and 5 may be configured to include the ball plunger in the tip holder so as to protrude the ball urged by a spring to outside of the tip holder. By providing a recess or the like fitted into the ball of the plunger at an appropriate position of the holding hole portion, the user can fix the tip holder into the holder attachment part if the ball is fitted into the recess similarly to embodiments 4 and 5.

### (EMBODIMENT 6)

A holder attachment part 70E and a chip holder 60E according to embodiment 6 of the present invention will be described referring to Fig. 21. Fig. 21 shows a cross section of the holder attachment part 70E and shows the tip holder 60E according to the present embodiment. The cross section of the holder attachment part 70E shown in Fig. 21 is a surface obtained by cutting a part between both side surfaces of a polygonal shape by a surface in parallel to the both side surfaces.

As shown in Fig. 21, the holder attachment part 70E is configured almost similarly to the holder attachment part 70D according to embodiment 4, and includes a holding hole portion 72E and a horizontal hole portion 75C. The holding hole portion 72E holds the inserted tip holder 60E. The horizontal hole portion 75C communicates with the holding hole portion 72E, and a bolt 90 serving as a support abutment member is inserted into the horizontal hole portion 75C. Similarly to the bar introduction groove 71D of the holder attachment part 70D according to embodiment 4, the holder attachment part 70E includes a bar introduction groove 71E for introducing an operation bar 61E of the tip holder 60E.

The tip holder 60E, which is made of generally cylindrical magnetic metal, rotatably holds a tip 14 similarly to embodiment 1 and further includes a through-hole on a cylindrical side surface. While a user insets the operation bar 61E into this through-hole, one end of the operation bar 61E does not protrude from the through-hole but remains in the through-hole. As shown in Fig. 21, the tip holder 60E includes a bolt insertion hole portion 76 on one end of the through-hole. The bolt insertion hole portion 76 is almost identical in diameter to the bolt 90 inserted from the horizontal hole portion 75C, and the bolt 90 is fitted into the bolt insertion hole portion 76.

If this tip holder 60E is inserted into the holding hole portion 72E of the holder attachment part 70E and the bolt 90 is inserted into the horizontal hole portion 75C while inserting the operation bar 61E into the bar introduction groove 71E, the bolt 90 is fitted into the bolt insertion hole portion 76 of the tip holder 60E. The tip holder 60E is thereby positioned with respect to the holder attachment part 70E and fixed into the holder attachment part 70E.

Alternatively, a coil spring may be used in place of the bolt 90 according to the present embodiment. The user can fix the tip holder 60E into the holder attachment part 70E by causing the coil spring to press the tip holder 60E.

The bolt insertion hole portion 76 according to the present embodiment is not necessarily at a position shown in figure as long as the bolt 90 can be fitted into the bolt insertion hole portion 76.

By the method described in each of the embodiments described so far, the user can position the tip holder with respect to the holder attachment part, fix the tip holder into the holder attachment part, and easily replace only the tip holder.

Although the tip holder described in each of the embodiments is generally cylindrical, the shape of the tip holder is not limited to this cylindrical shape. Even if the tip holder is prismatic, it is possible to exhibit advantages of the present invention.

Moreover, the two-dimensional code or data carrier described in embodiment 1 can be provided in the tip holder according to each of embodiments 2 to 6, thereby making it possible to manage various pieces of data characteristic of each tip.

### INDUSTRIAL APPLICABILITY

The present invention is applicable to a tool or a device using a tip for forming scribe lines on a brittlle material-based substrate. According to the present invention, the tip holder is attachable into or detachable from the tool or device quite easily, and it is thereby possible to easily replace one tip by another.

## Claims

1. A tip holder for a manual cutter used to scribe a brittle material-based substrate, comprising:
a tip rotatably attached to one end of said tip holder, and forming a scribe line on a brittle material; and
an attachment formed by cutting other end of said tip holder.

2. The tip holder for a manual cutter according to claim 1, wherein
a code of characteristic data is recorded on said tip holder.

3. The tip holder for a manual cutter according to claim 2, wherein
said code is a two-dimensional code.

4. The tip holder for a manual cutter according to claim 3, wherein
the characteristic data of said tip holder includes data indicating a type of said tip.

5. The tip holder for a manual cutter according to any one of claims 1 to 4, wherein
said attachment includes a magnet.

6. A tip holder for a manual cutter used to scribe a brittle material-based substrate, comprising:
a tip rotatably attached to one end of said tip holder, and forming a scribe line on a brittle material; and
an operation bar provided on a side surface of said tip holder, for grasping the tip holder.

7. The tip holder for a manual cutter according to claim 6, wherein
a recess is provided in a part of a side surface of said tip holder.

8. The tip holder for a manual cutter according to claim 6, wherein
a hole portion is provided in a part of a side surface of said tip holder.

9. The tip holder for a manual cutter according to claim 6, wherein
a code of characteristic data is recorded on said tip holder.

10. The tip holder for a manual cutter according to claim 9, wherein
said code is a two-dimensional code.

11. The tip holder for a hand cutter according to claim 10, wherein
the characteristic data of said tip holder includes data indicating a type of said tip.

12. The tip holder for a manual cutter according to any one of claims 6 to 11, comprising a magnet on other end of the tip holder.

13. A manual cutter comprising:
a handle;
a tip holder scribing a brittle material-based substrate; and
a holder attachment part provided on a tip end of said handle, and fixing said tip holder, wherein
said tip holder comprises:
a tip rotatably attached to one end of said tip holder, and forming a scribe line on a brittle material; and
an attachment formed by cutting other end of said tip holder, and wherein
said tip attachment comprises:
a holding hole portion holding said tip holder by inserting said tip holder into the holding hole portion; and
a fixing member pressing said attachment of said tip holder inserted into said holding hole portion, and fixing said tip holder into said holding hole portion.

14. The manual cutter according to claim 13, wherein
said tip holder further comprises a code recording characteristic data to said tip.

15. The manual cutter according to claim 14, wherein
said code is a two-dimensional code.

16. The manual cutter according to claim 15, wherein
the characteristic data of said tip holder includes data indicating a type of said tip.

17. The manual hand cutter according to any one of claims 13 to 16, wherein
said tip holder is made of magnetic metal,
said holder attachment part includes a magnet on said holding hold, and
said magnet attracts and fixes said tip holder inserted into said holding hole portion by a magnetic force.

18. A manual cutter comprising:
a handle;
a tip holder scribing a brittle material-based substrate; and
a holder attachment part provided on a tip end of said handle, and fixing said tip holder, wherein
said tip holder comprises:
a tip rotatably attached to one end of said tip holder, and forming a scribe line on a brittle material; and
an operation bar provided on a side surface of said tip holder, for grasping the tip holder, and wherein
said holder attachment part comprises:
a holding hole portion holding said tip holder by inserting said tip holder into the holding hole portion; and
an operation bar introduction groove, said operation bar of said tip holder inserted into said holding hole portion being introduced into the operation bar introduction groove.

19. The manual cutter according to claim 18, wherein
said tip holder includes a recess in a part of the side surface of said tip holder, and
said holding hole portion includes an elastic body fitted into said recess when said tip holder is inserted into the holding hole portion.

20. The manual cutter according to claim 18, wherein
said tip holder includes a hole portion in a part of the side surface of said tip holder,
the holder attachment part includes a horizontal hole portion communicating with said holding hole portion, and
said tip holder is fixed into said holding hole portion by abutting a support abutment member inserted into said horizontal hole portion against said tip holder when said tip holder is inserted into said holding hole portion.
